# EUROPEAN PATENT APPLICATION

(11) **EP 0 653 660 A1**
(43) Date of publication of application: **17.05.1995**
(21) Application number: 94308078.8
(22) Date of filing: 02.11.1994
(51) Int. Cl.: G02F 1/09

(54) **Optical isolator with reduced walk-off**

(30) Priority: 12.11.1993 US 151092
(71) Applicant: AT&T Corp., New York, NY 10013-2412 (US)
(72) Inventor: Emkey, William Lewis, Bethlehem, Pennsylvania 18017 (US)
(74) Representative: Johnston, Kenneth Graham

(57) **Abstract**

An optical isolator includes first and second groups (10.1, 10.2) of optical elements arranged in tandem on a common axis (13). The two groups are mirror images of one another. In one embodiment, each group comprises a non-reciprocal rotator slab (12.1, 12.2) positioned between a pair of birefringent wedges (14.1, 16.1; 14.2, 16.2). The design is capable of exhibiting zero net walk-off between the input and output beams, zero relative walk-off between the ordinary and extraordinary beams, or both.

## Description

### Background of the Invention

The present invention relates to an optical isolator designed to reduce the displacement between both the ordinary and extraordinary rays at the isolator output (*relative walk-off*) and/or between the input and output beams of the isolator (*net walk-off*).

Reflections in optical systems often generate noise and optical feedback which may degrade the performance of various system components, particularly signal sources such as semiconductor lasers and fiber amplifiers. Therefore, the ability to optically isolate lasers and other sensitive components from these reflections is often critical to the performance of the system. In general, a conventional optical isolator comprises a non-reciprocal rotator (e.g., 45° Faraday rotator encased within a bias magnet) disposed between a pair of polarization selectors (e.g., linear polarizers, birefringent plates, or birefringent wedges). Input signals passing through the isolator in the transmitting, forward direction are essentially fully coupled through the polarization selector and Faraday rotator to the output device (e.g., fiber). However, the polarization of reflected signals passing through the isolator in the reflecting, reverse direction is rotated such that essentially none of the reflections are coupled back into the signal source.

A common isolator design includes a Faraday rotator slab sandwiched between a pair of birefringent wedges. See, for example, W. Emkey et al., Proc. OFC, Abstract THF2 (1989). Under certain conditions, this design is effective in reducing the polarization dependence of the isolator. However, the input and output beams of such an isolator are displaced from another, a phenomenon called *net* *walk-off*. Because the input and output beams are not coaxial, the mechanical/optical design of the isolator is complicated and its cost of manufacture increased.

In addition, this design exhibits a phenomenon called *relative walk-off*. That is, the input signal splits into ordinary and extraordinary rays which are displaced from one another at the isolator output. When the output is lensed into an aperture (e.g., a fiber core), the power coupled into the fiber from each ray can be different, and the total coupled power is less than that possible if the relative walk-off did not occur.

A need remains, therefore, for an optical isolator which has the capability for zero relative walk-off (i.e., coaxial ordinary and extraordinary rays) and/or zero net walk-off (i.e., coaxial input and output beams).

### Summary of the Invention

An optical isolator comprises a first group of optical elements adapted to receive an input beam and tending to split the beam into ordinary and extraordinary rays, and a second group of optical elements adapted to receive the rays and to make them essentially coaxial at the output of the second group. In one embodiment the second group is designed to be the mirror image of the first group relative to an image plane between the groups.

In a preferred embodiment, each group itself comprises an optical isolator, e.g., a Faraday rotator slab disposed between a pair of birefringent wedges. In yet another embodiment the oblique surfaces of the wedges in the first group are oriented at an angle + α to the normal to a common axis between the groups, whereas the same surfaces in the second group are oriented at - α. Various ones of these embodiments exhibit reduced relative walk-off, reduced net walk-off, or both.

### Brief Description of the Drawings

The invention, together with its various features and advantages, can be readily understood from the following more detailed description taken in conjunction with the accompanying drawing, in which:
FIG. 1 is a schematic of an optical isolator in accordance with one embodiment of the invention; and
FIG. 2 is a schematic of the wedges used in FIG. 1 showing, illustrative orientations of their C-axis.

The figures are not drawn to scale, and the various angles, dimensions, and light ray directions are exaggerated in order to improve clarity. In particular, the refraction of the light rays at the interior surfaces of the element groups is omitted for simplicity.

### Detailed Description

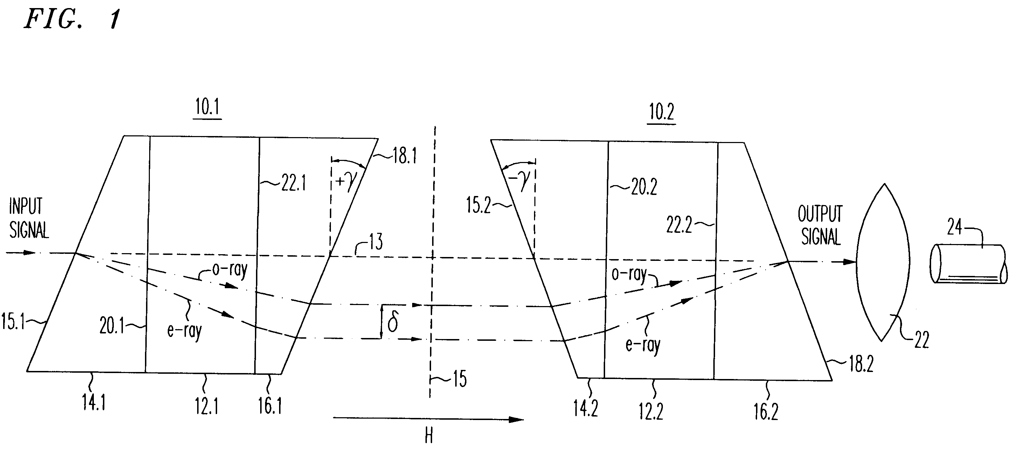

FIG. 1 illustrates an optical isolator comprising a first element group 10.1 adapted to receive an input signal beam and tending to split the beam into ordinary rays (o-rays) and extraordinary rays (e-rays), and a second element group 10.2 adapted to receive the rays and to make them coaxial at the output of the second group. Illustratively, the first and second element groups 10.1 and 10.2 are coaxially disposed along a common axis 13. Each group includes three basic components: a pair of birefringent (e.g., rutile, calcite) wedges 14.1, 16.1 and 14.2, 16.2 and a non-reciprocal (e.g., Faraday) rotator slab 12.1, 12.2 (e.g., a thin film of a garnet material) located between the wedges. Wedges 14.1 and 14.2 are termed input wedges, whereas wedges 16.1 and 16.2 are termed output wedges. In accordance with one embodiment of the invention, groups 10.1 and 10.2 are designed to be mirror images of one another with respect to image plane 15. The image plane is positioned between the two groups and perpendicular to the common axis 13.

The invention, however, may be viewed another way. In group 10.1 each oblique interface traversed by the input beam is oriented at an angle + α to the normal to axis 13, but in group 10.2 the oblique surfaces are oriented at an angle - α to the normal to axis 13.

In either case, the o-ray in group 10.1 is also the o-ray in group 10.2, and, likewise, the e-ray in group 10.2 is also the e-ray in group 10.2. That is, the identity of the o-rays and e-rays is preserved as the beam traverses the two groups.

An important advantage of this design is that the o-rays and the e-rays are coaxial at the isolator output, even though they are displaced from one another by a distance δ in the region between the groups 10.1 and 10.2; that is, the isolator exhibits essentially zero relative walk-off. In addition, this design also exhibits essentially zero net walk-off; that is, the input beam and the output beam are coaxial along axis 13. Thus, the invention advantageously exhibits reduced polarization dependent loss (PDL), a phenomenon related to the fact that non-coaxial o-rays and e-rays typically enter an aperture at different angles and hence have different coupling coefficients to that aperture (e.g., the core of a fiber). The invention also simplifies manufacturing (e.g., alignment steps and package design) because the input and output beams are coaxial.

It is understood that in actual operation isolator 10 typically requires a permanent magnet to generate the magnetic field H parallel to axis 13 and may include lensing elements and antireflection coatings, all of which are well known in the art. For the sake of clarity, the magnets and coatings are not shown and are not considered as necessary for an understanding of the operation of the isolator in accordance with the teachings of the present invention. The lensing elements are depicted schematically by lens means 22 which focuses the output signal into an aperture such as the core of optical fiber 24.

In accordance with this aspect of the invention, output wedge 16.1 and input wedge 14.2 have their C-axes essentially parallel to one another, but the relationship of the C-axes of wedges 14.1 and 16.2 depends on the direction of the magnetic field; i.e., if the field direction is the same in both isolators (FIG. 1), then the C-axes of wedges 14.1 and 16.2 should be essentially perpendicular to one another. But, if the fields are opposed, then these C-axes should be parallel. In either case, we consider the element groups to be mirror images of one another.

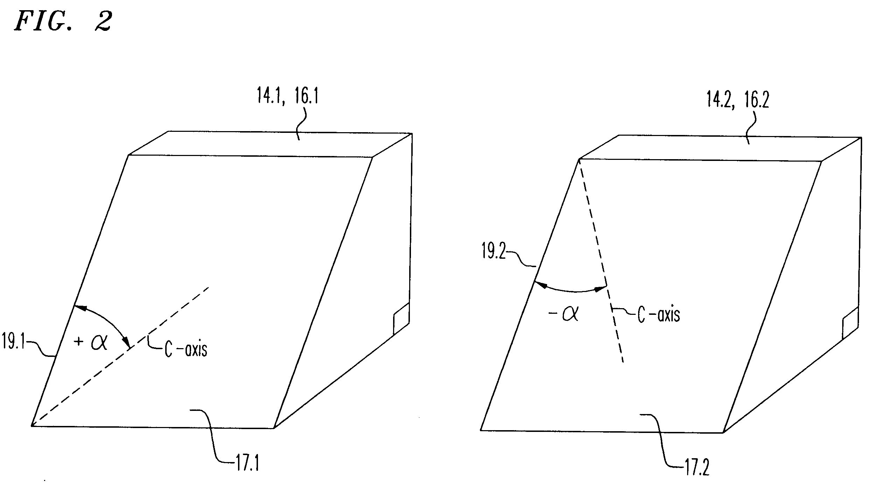

In addition, as is well known in the art, wedges 14.1, 16.1 of group 10.1 have their C-axes oriented at 45° to one another, and the wedges 14.2, 16.2 of group 10.2 likewise have their C-axes oriented at 45° to one another. For example, in one convenient design shown in FIG. 2, wedges 14.1, 16.1 have their C-axes located in the plane of oblique face 17.1 and oriented at an angle α = + 22.5° with respect to edge 19.1. On the other hand, wedges 14.2, 16.2 have their C-axes located in the plane of oblique face 17.2 and oriented at an angle of α = - 22.5° with respect to corresponding edge 19.2.

Faraday rotator 12, as is well-known in the art, is designed to provide a non-reciprocal, 45° polarization rotation to an optical signal passing therethrough. Thus, an input optical signal will pass through isolator 10 from left to right relatively unimpeded, while a reverse (e.g., reflected) optical signal traveling from right to left will be deflected by isolator 10 in a manner which prevents it from entering the source (not shown) of the input signal.

Moreover, the use of two isolator element groups in tandem increases the isolation as compared to a single stage device, yet does not significantly increase the insertion loss.

It is to be understood that the above-described arrangements are merely illustrative of the many possible specific embodiments which can be devised to represent application of the principles of the invention. Numerous and varied other arrangements can be devised in accordance with these principles by those skilled in the art without departing from the spirit and scope of the invention. In particular, the invention contemplates that the element groups may take on other geometric configurations besides the two-wedge, single slab design depicted. Moreover, although simplicity and cost dictate that the wedges are made of the same birefringent materials, it is also possible to utilize different materials in different wedges.

In addition, we observe that the body identified herein as a *wedge* need not have a cross-section in the shape of a right triangle (whether truncated as in FIGS. 1-2, or not) or in the shape of any triangle for that matter. The important geometric features of each such a body are the two non-parallel surfaces traversed by the light beam (e.g., surfaces 15.1, 20.1 of wedge 14.1; surfaces 18.1, 22. 1 of wedge 16.1; surfaces 15.2, 20.2 of wedge 14.2; and surfaces 18.2, 22.2 of wedge 16.2). Finally, although it would complicate the design, element groups 10.1 and 10.2 could be transversely offset from one another (e.g., in a direction along plane 15) such that they would not share a common geometric axis 13. However, the groups would have comparable axes parallel to one another. Positioned in this way, it might appear that the two groups would not be mirror images, but in fact they would still fall within the scope of invention because the portion of the groups traversed (*seen*) by the light beams would have a common optical axis and hence would still be mirror images of one another.

## Claims

1. An optical isolator comprising:
first and second groups (10.1, 10.2) of optical elements arranged in tandem along a common axis (13), CHARACTERIZED IN THAT
said groups are mirror images of one another relative to a plane (15) between the groups and perpendicular to said axis.

2. The isolator of claim 1 wherein each of said groups comprises input and output birefringent wedges and a non-reciprocal rotator slab positioned between said wedges.

3. The isolator of claim 2 wherein the output wedge of said first group and the input wedge of said second group have their C-axes essentially parallel to one another.

4. The isolator of claim 3 wherein the C-axes of the wedges of said first group are oriented at an angle of approximately 45° to one another, and the C-axes of the wedges of said second group are also oriented at an angle of approximately 45° to one another.

5. An optical isolator comprising:
a group of isolator elements adapted to receive an input beam which tends to split said signal into ordinary and extraordinary rays and adapted to emit an output beam which tends to be non-coaxial with said input beam,
a first group of said elements comprising input and output birefringent first wedges and a first non-reciprocal rotator slab disposed on a common axis, said first wedges each having an oblique surface which makes an angle + α to the normal to said axis,
a second group of said elements comprising input and output birefringent second wedges and a second non-reciprocal rotator slab disposed on said axis, said second wedges each having an oblique surface which makes an angle - α to the normal to said axis,
said output wedge of said first group and said input wedge of said second group having their C-axes essentially parallel to one another,
said first wedges having their C-axes oriented at approximately 45° to one another, and said second wedges having their C-axes oriented at approximately 45° to one another,
thereby to produce essentially zero relative walk-off between said ordinary and extraordinary rays and essentially zero net walk-off between said input beam and said output beam.

6. An optical isolator comprising:
a first group of optical elements adapted to receive an input beam and tending to split said beam into ordinary and extraordinary rays, and
CHARACTERIZED BY
a second group of optical elements adapted to receive said rays and to make them essentially coaxial at the output of said second group.

7. The isolator of claim 6 wherein at least one of said groups comprises an optical isolator.

8. The isolator of claim 6 wherein each of said groups comprises an optical isolator.

9. The isolator of claim 8 wherein each of said groups comprises input and output birefringent wedges and a non-reciprocal rotator positioned between said wedges.

10. The isolator of claim 9 wherein said output wedge of said first group and said input wedge of said second group have their C-axes essentially parallel to one another.

11. The isolator of claim 10 further including means for applying a magnetic field in the same direction to each of said groups and wherein said input wedge of said first group and said output wedge of said second group have their C-axes essentially perpendicular to one another.

12. The isolator of claim 10 further including means for applying a magnetic field in opposed directions to said groups and wherein said input wedge of said first group and said output wedge of said second group have their C-axes essentially parallel to one another.
